# EUROPEAN PATENT APPLICATION

(11) **EP 3 944 261 A1**
(43) Date of publication of application: **26.01.2022**
(21) Application number: 21186725.4
(22) Date of filing: 20.07.2021
(51) Int. Cl.: H01B 7/00, H01B 13/00

(54) **BUSBAR HAVIING HIGH COUPLING REINFORCEMENT AND METHOD THEREOF**

(30) Priority: 21.07.2020 KR 20200090225
(71) Applicant: DAE SAN ELECTRONICS CO., LTD., Gyeonggi-do 18284 (KR)
(72) Inventor: MA, Sangyoung, 15482 Ansan-si (KR); CHEONG, Do Young, 17734 Pyeongtaek-si (KR)
(74) Representative: BCKIP

(57) **Abstract**

Disclosed are herein a busbar having improved bonding and reinforcing strength, which includes: a first metal member in which at least one fastening hole is formed; a second metal member in which at least one strength reinforcement coupled to the fastening hole is formed; and an electrically conductive bonding layer configured to bond the first metal member and the second metal member, and a method of manufacturing the same.

## Description

The present disclosure relates to a busbar having improved bonding and reinforcing strength and a method of manufacturing the same.

In general, busbars are bar-like conductors that enable electric connection like electric wires, and serve as a current passage between electric parts.

In comparison with existing electric wires, the busbars have high efficiency of space use and can support loads of the electric parts, and thus are essentially used in vehicles, airplanes, and so on in which electric parts should be connected in a restricted space.

The busbars are typically made of a copper material having high electric conductivity in a single structure. When the busbars are made of a copper material in a single structure, manufacturing costs thereof are higher than those of other base metals, and loads thereof are increased.

To solve the problems when the busbars are made of a copper material in a single structure, i.e., the problems that a lot of manufacturing costs are incurred and the busbars are heavy, a clad obtained by bonding an aluminum plate and a copper plate is applied.

However, the busbars manufactured by conventional methods of manufacturing busbars are generally bonded using an ultrasonic mode or a TOX mode, only this mode has a limitation to bonding reliability, and especially it is difficult to secure stability in an operation environment when used after being installed on vehicles or the like.

### [Related Art Document]

### [Patent Document]

(Patent Document 0001) Korean Registered Patent No. 10-1748845 (June 13, 2017)

The present disclosure has been made to solve the above-mentioned technical problems, and is directed to providing a busbar having improved bonding and reinforcing strength capable of improving mechanical performance such as high bonding strength and tensile strength by manufacturing the busbar in the way of bonding a plurality of metal materials used as materials for the busbar in a specific structure, and a method of manufacturing the same.

According to an embodiment of the present disclosure, a busbar having improved bonding and reinforcing strength includes:
a first metal member in which at least one fastening hole is formed;
a second metal member in which at least one strength reinforcement coupled to the fastening hole is formed; and
an electrically conductive bonding layer configured to bond the first metal member and the second metal member.

In an embodiment of the present disclosure, the strength reinforcements may be formed by a burring process.

In an embodiment of the present disclosure, the strength reinforcements may extend downward at a predetermined length so as to be insertable into fastening holes of the first metal member.

Here, in an embodiment of the present disclosure, the extending lengths of the strength reinforcements may be smaller than or equal to depths of the fastening holes.

In an embodiment of the present disclosure, the electrically conductive bonding layer may be formed between the strength reinforcements and the fastening holes of the first metal member.

In an embodiment of the present disclosure, after the strength reinforcements are inserted into fastening holes of the first metal member, the strength reinforcements may press at least some of inner circumferential surfaces of the fastening holes.

In an embodiment of the present disclosure, the first metal member may be made of an aluminum material, and the second metal member may be made of a copper material.

In an embodiment of the present disclosure, the strength reinforcements may have circular cross sections, polygonal cross sections, or elliptical cross sections.

In an embodiment of the present disclosure, one end of each of the strength reinforcements may protrude in an outer circumferential direction at a predetermined length and may be formed to press at least one side of each of the fastening holes.

In an embodiment of the present disclosure, at least a part of the first metal member and/or the second metal member may have a flexure bent in one direction.

In an embodiment of the present disclosure, shear stress may be produced by bonding strength applied to an interface of the first metal member and/or the second metal member.

In an embodiment of the present disclosure, an outer diameter (W₁) of each of the strength reinforcements may be smaller than an inner diameter (W₂) of each of the fastening holes of the first metal member.

According to another embodiment of the present disclosure, a method of manufacturing a busbar includes:
a process of preparing a first metal member in which at least one fastening hole is formed;
a process of preparing a second metal member which is made of a material different from that of the first metal member and in which at least one strength reinforcement is formed;
an electrically conductive adhesive applying process of applying an electrically conductive adhesive to one surface of the first metal member or one surface of the second metal member;
a bonding process of placing and pressing the second metal member on the one surface of the first metal member such that the strength reinforcements are inserted into the fastening holes; and
an adhesive hardening process of hardening the electrically conductive adhesive.

In another embodiment of the present disclosure, the method may further include a pressing process of pressing at least some of the strength reinforcements after the bonding process, and pressing inner circumferential portions of the fastening holes.

In another embodiment of the present disclosure, the process of preparing a first metal member or the process of preparing a second metal member may include a process of bending at least a part of the first or second metal member to form flexures. According to circumstances, the process of forming the flexures may be performed along with the strength reinforcement forming process when the process of preparing a first metal member and/or the process of preparing a second metal member are performed in one process.

In a busbar having improved bonding and reinforcing strength and a method of manufacturing the same according to the present disclosure, the busbar is manufactured in the way of bonding a plurality of metal materials used as materials for the busbar in a specific structure, thereby improving mechanical performance such as high bonding strength and tensile strength.

Effects of the present disclosure are not limited by the above-mentioned effects. Other unmentioned effects can be clearly understood from the description of the claims by those having ordinary skill in the art.
FIG. 1 is a perspective view of a first metal member according to an embodiment of the present disclosure.
FIG. 2 is a perspective view of a second metal member according to an embodiment of the present disclosure.
FIG. 3 is an exploded sectional view of a busbar according to an embodiment of the present disclosure.
FIG. 4 is a fastening sectional view of a busbar according to an embodiment of the present disclosure.
FIG. 5 is a partially enlarged view of "A" of FIG. 4.
FIG. 6 is an exemplary view illustrating a process of manufacturing a busbar according to an embodiment of the present disclosure.
FIG. 7 is a flow chart illustrating the process of manufacturing a busbar according to an embodiment of the present disclosure.

Hereinafter, a busbar having improved bonding and reinforcing strength and a method of manufacturing the same according to an embodiment of the present disclosure will be described in detail with reference to the accompanying drawings. In adding reference signs to components of each drawing, it should be noted that the same reference signs are assigned to the same components as much as possible even though they are shown in different drawings. Also, in describing embodiments of the present disclosure, if it is determined that a detailed description of the related known configuration or function may obstruct understanding of the embodiments of the present disclosure, the detailed description thereof will be omitted.

In describing the components of the present disclosure, the terms such as "first", "second", "A", "B", "(a)" and "(b)" may be used. These terms are only for distinguishing the corresponding component from another component, and the nature, order or sequence of the components is not limited by the terms. In addition, unless otherwise defined, all terms including technical and scientific terms used herein have the same meaning as commonly understood by those having ordinary skill in the art to which the present disclosure pertains. It will be further understood that terms, such as those defined in commonly used dictionaries, should be interpreted as having meanings that are consistent with their meanings in the context of the relevant art and will not be interpreted in an idealized or overly formal sense unless expressly so defined herein.

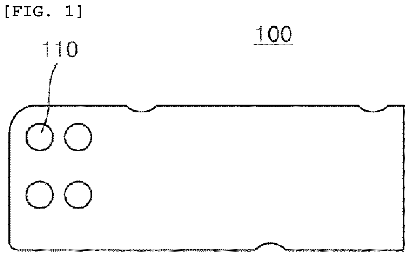

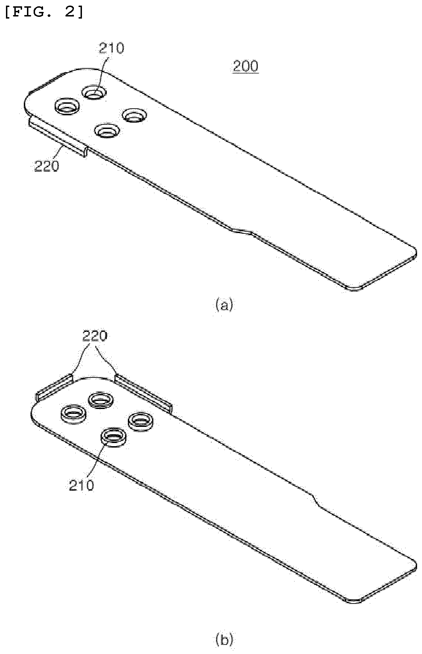

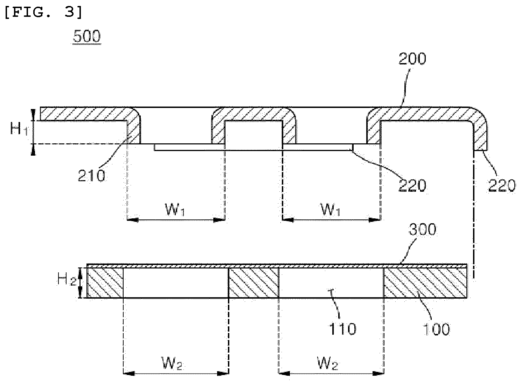

FIG. 1 is a perspective view of a first metal member according to an embodiment of the present disclosure. FIG. 2 is a perspective view of a second metal member according to an embodiment of the present disclosure. FIG. 3 is an exploded sectional view of a busbar according to an embodiment of the present disclosure.

Referring to FIGS. 1 to 3, a busbar 500 having improved bonding and reinforcing strength according to the present disclosure may include a first metal member 100 in which a plurality of fastening holes 110 are formed, a second metal member 200 in which a plurality of strength reinforcements 210 coupled to a plurality of fastening holes 110 are formed, and an electrically conductive bonding layer 300 that bonds the first metal member 100 and the second metal member 200.

The first metal member 100 is a conductive metal plate made of an aluminum material or an aluminum alloy containing aluminum, or the second metal member 200 is a conductive metal plate made of a copper material or a copper alloy containing copper, each of which is given by way of example. That is, the first metal member 100 is made of an aluminum (Al) material that is lighter and more inexpensive than a copper material, and the second metal member 200 is made of a copper (Cu) material having good electrical conductivity, both of which are given by way of example.

The first metal member 100 and the second metal member 200 may include a clad material for manufacturing the busbar, and the clad may be applied to busbars as bar-like conductors which enable electrical connection. The first metal member 100 functions as a body of the busbar, and the second metal member 200 may include a portion that is a connector connected to a terminal of the electric part on the side of an end of the busbar.

The electrically conductive bonding layer 300 may be formed of an electrically conductive adhesive that is applied and hardened between the first metal member 100 and the second metal member 200. The electrically conductive adhesive is applied to any one of one surface of the first metal member 100 and one surface of the second metal member 200 facing the first metal member 100 and, in the state in which the electrically conductive adhesive is applied, the second metal member 200 is placed on and then pressed against one surface of the first metal member 100, and the electrically conductive adhesive is hardened. Thereby, the second metal member 200 is bonded and located to the one surface of the first metal member 100. The electrically conductive bonding layer 300 may be variously modified and performed using a well-known electrically conductive adhesive (ECA). In this case, the electrically conductive bonding layer 300 may be provided between the fastening holes 110 of the first metal member 100 and the strength reinforcements 210 of the second metal member 200, the configuration of which will be described below in greater detail.

Meanwhile, four fastening holes 110 may be formed in the first metal member 100. The fastening holes 110 of the first metal member 100 may be formed in a circular cross section, but be formed by separate punching.

The second metal member 200 may be provided with four strength reinforcements 210 at portions corresponding to the four fastening holes 110 of the first metal member 100. The strength reinforcements 210 may be formed in a circular cross section, but be formed in the way of extending downward at a predetermined length. Of course, the strength reinforcements 210 are not particularly limited as long as they can be inserted into the fastening holes 110, and may be formed in a polygonal shape or an oval shape.

Further, the second metal member 200 may be provided with flexures 220 that are downwardly bent and extended toward one side thereof. Thereby, lateral portions of the first metal member 100 are formed in such a way that they are surrounded by the flexures 220 of the second metal member 200. Thereby, bonding strength between the first metal member 100 and the second metal member 200 can be improved.

The strength reinforcements 210 may extend from the one surface of the second metal member 200 in a middle portion of the second metal member 200 in one direction, i.e., in a downward direction, and be exerted into the fastening holes 110 of the first metal member 100. According to the present disclosure, the strength reinforcements 210 of the second metal member 200 are preferably formed by a burring machining method by way of example, but are naturally not limited thereto.

Specifically, the busbar 500 having improved bonding and reinforcing strength according to the present disclosure may have a structure in which the first metal member 100, the second metal member 200, and the electrically conductive bonding layer 300 between the first metal member 100 and the second metal member 200 are provided. Here, the strength reinforcements 210 of the second metal member 200 may be inserted into the fastening holes 110 of the first metal member 100.

As described above, the strength reinforcements 210 may extend downward form the one surface of the second metal member 200 at a predetermined height H₁, and thus the fastening holes 110 of the first metal member 100 may be formed at a predetermined depth H₂. In this case, the height H₁ of each strength reinforcement 210 of the second metal member 200 may be smaller than the depth H₂ of each fastening hole 110 of the first metal member 100. According to circumstances, the height H₁ of the strength reinforcement 210 may naturally be equal to or greater than the depth H₂ of the fastening hole 110. Therefore, the strength reinforcements 210 of the second metal member 200 may be stably inserted into the fastening holes 110 of the first metal member 100.

Here, according to the present disclosure, an outer diameter W₁ of the strength reinforcements 210 of the second metal member 200 is preferably relatively smaller than an inner diameter W₂, i.e., a width, of the fastening holes 110 of the first metal member 100. Due to this structure, the strength reinforcements 210 of the second metal member 200 can be not only easily inserted into the fastening holes 110 of the first metal member 100, and the outer diameter W₁ of the strength reinforcements 210 of the second metal member 200 is but also made relatively smaller than the inner diameter W₂, of the fastening holes 110 of the first metal member 100. Thereby, the electrically conductive adhesive can be introduced and hardened into portions of outer circumferential surfaces of the strength reinforcements 210 and portions of inner circumferential surfaces 111 of the fastening holes 110 such that the electrically conductive bonding layer 300 is formed. In addition, when the first metal member 100 and the second metal member 200 are bonded, the electrically conductive adhesive can also be introduced and hardened between a lateral portion of the first metal member 100 and the flexures 220 of the second metal member 200 such that the electrically conductive bonding layer 300 is formed.

Furthermore, the busbar 500 having improved bonding and reinforcing strength according to the present disclosure may enable one portions of the strength reinforcements 210 of the second metal member 200 to press one portions of the inner circumferential surfaces 111 of the fastening holes 110 of the first metal member 100 through a separate working process in order to improve mechanical performance such as high bonding strength and tensile strength.

The process of manufacturing the busbar 500 having improved bonding and reinforcing strength according to the present disclosure including the pressing process of the strength reinforcements 210 will be described below in detail with reference to the accompanying drawings.

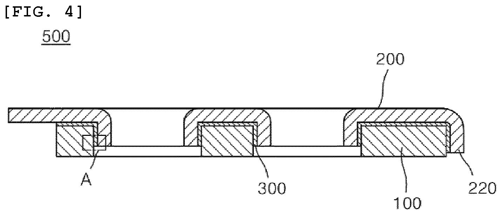

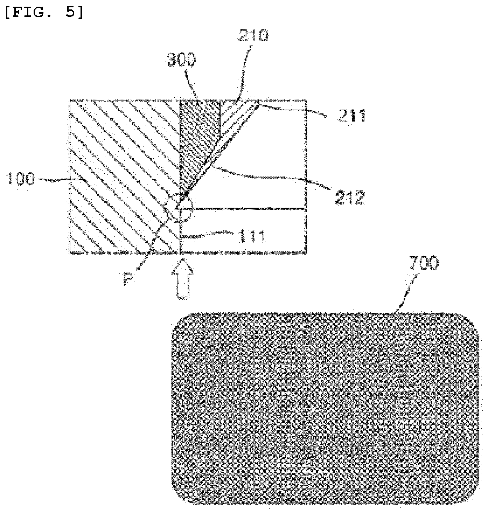

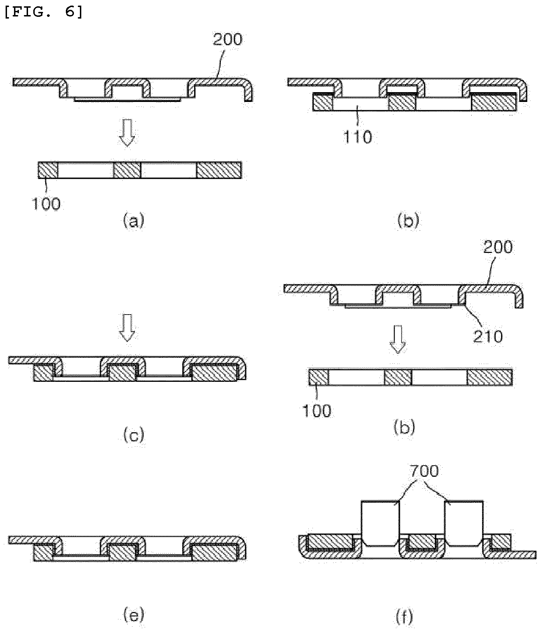

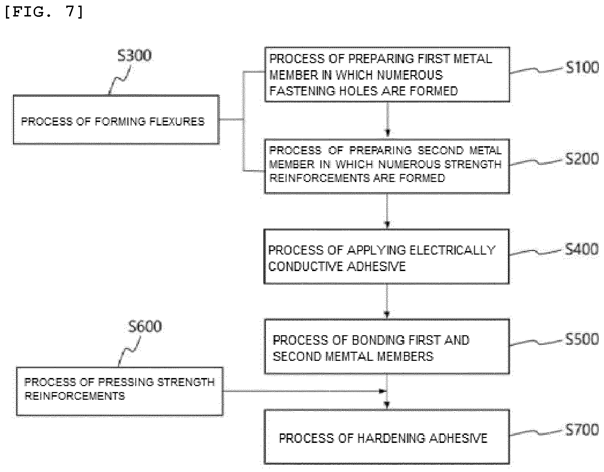

FIG. 4 is a fastening sectional view of a busbar according to an embodiment of the present disclosure. FIG. 5 is a partially enlarged view of "A" of FIG. 4. FIG. 6 is an exemplary view illustrating a process of manufacturing a busbar according to an embodiment of the present disclosure. FIG. 7 is a flow chart illustrating the process of manufacturing a busbar according to an embodiment of the present disclosure.

Referring to FIGS. 4 to 7, a process of manufacturing a busbar having improved bonding and reinforcing strength according to an embodiment of the present disclosure may include a metal member preparing process S200 of preparing a first metal member 100 in which a plurality of fastening holes 110 are formed and a second metal member 200 in which a plurality of strength reinforcements 210 made of a material different from that of the first metal member 100 are formed, a process S300 of forming at least one flexure 220 on one side of the first metal member 100 or the second metal member 200, an electrically conductive adhesive applying process S400 of applying an electrically conductive adhesive to one surface of the first metal member 100 or one surface of the second metal member 200, a bonding process S500 of placing the second metal member 200 on the one surface of the first metal member 100 and pressing and bonding the second metal member 200 under pressure, a pressing process S600 of pressing portions of first sides of strength reinforcements 210 of the second metal member 200, and an adhesive hardening process S700 of hardening the electrically conductive adhesive.

First, in the first metal member preparing process S100, a plurality of fastening holes 110 may be formed in a first metal member 100, which is an electrically conductive metal plate made of an aluminum material or an aluminum alloy containing aluminum, by means of a punching process.

Further, in the second metal member preparing process S200, a plurality of strength reinforcements 210 may be formed in a second metal member 200, which is an electrically conductive metal plate made of a copper material or a copper alloy containing copper, in a number and at positions corresponding to the fastening holes 110 by means of a burring process. A lower plate zig may be prepared, and this conductive metal plate may be placed on the zig.

Here, in the flexure forming process S300 of forming flexures 220 of the second metal member 200, along with forming a burr in the second metal member preparing process S200, the flexures 220 may be formed by bending at least one end portion of the second metal member 200. Alternately, the first metal member 100 and the second metal member 200 may be prepared in one process, and the flexures 220 may be formed in one process along with the burring process as in a process such as a pressing process.

The flexures 220 of the second metal member 200 may be formed by vertical bending one time or more so as to surround one lateral surface of the first metal member 100. An electrically conductive bonding layer 300 may be formed "on the bonding surface 210. As described above, when the bonding surface 210 is formed, the second metal member 200 may be bonded toward the first metal member 100, i.e., in a direction perpendicular to the ground under pressure, and thereby shear stress may be produced in a horizontal direction, so that the bonding strength and tensile strength of the first metal member 100 and the second metal member 200 may be greatly improved. This provides an effect of giving a step to the bonding surfaces of the first metal member 100 and the second metal member 200, and thus an effect of preventing a phenomenon that is mutually twisted or distorted by an external force. According to the present disclosure, the shear stress of the busbar 500, having improved bonding and reinforcing strength, manufactured according to the present disclosure may have a magnitude ranging from about 100 N to 1300 N.

Afterward, in the electrically conductive adhesive applying process S400, an electrically conductive adhesive may be applied to one surface of the first metal member 100 or one surface of the second metal member 200. In this case, the electrically conductive adhesive may be applied to contact surface portions at which the first metal member 100 and the second metal member 200 come into contact with each other, and be applied between the fastening holes 110 of the first metal member 100 and the strength reinforcements 210 of the second metal member 200.

In the bonding process S500 of mutually bonding the first metal member 100 and the second metal member 200, an upper plate zig may be fastened, the second metal member 200 may be pressed and bonded to the first metal member 100. According to the present disclosure, the pressing process may be performed at a magnitude of about at least 2.0 N. For example, the first metal member 100 and the second metal member 200 may be press-fitted in such a way that the strength reinforcements 210 of the second metal member 200 are inserted and fitted into the fastening holes 110 of the first metal member 100.

Next, in the pressing process S600 of pressing the strength reinforcements 210 according to the present disclosure, after the first metal member 100 and the second metal member 200 are pressed and bonded under pressure, end portions of inner circumferential surfaces 211 of the strength reinforcements 210 of the second metal member 200 may be pressed using separate pressing members 700.

In this case, as illustrated in FIG. 5, in the strength reinforcements 210 of the second metal member 200, contact pressed points P sunk when one ends of the strength reinforcements 210 press portions of inner circumferential surfaces 111 of the fastening holes 110 of the first metal member 100 may be formed in the pressing process of the pressing members 700. That is, the pressing members 700 are configured to form slopes 212 inclined in the process of pressing lowermost ends of the inner circumferential surfaces 211 of the strength reinforcements 210, and to press the portions of the inner circumferential surfaces 111 of the fastening holes 110 of the first metal member 100. Thereby, the bonding strength and tensile strength of the first metal member 100 and the second metal member 200 can be greatly improved.

According to circumstances, although not illustrated in the drawings of the present disclosure, as described above, after the height H₁ of each strength reinforcement 210 of the second metal member 200 is made greater than the depth H₂ of each fastening hole 110 of the first metal member 100, and then the strength reinforcements 210 are pressed by the pressing members 700. Thereby, the ends of the strength reinforcements 210 may be configured to pass through the fastening holes 110 of the first metal member 100 and to surround bottom portion of the first metal member 100.

Next, in the adhesive hardening process S700, the first metal member 100 and the second metal member 200 that have been bonded by the electrically conductive adhesive may be heated and hardened in a heating chamber through a heating means such as a hot blast machine (not illustrated). In the adhesive hardening process S700, they may preferably be hardened in a sealed chamber space within a temperature range of about 130 to 200°C for a time of 15 to 30 min. According to circumstances, the adhesive hardening process S700 may be naturally performed at room temperature.

Finally, after this hardening process is completed, the upper plate zig is separated from the busbar. Then, the busbar may be provided as a finished product by checking a final product state and measuring electrical and mechanical properties of the product, such as tensile strength, resistance, and so on.

The busbar having improved bonding and reinforcing strength and the method of manufacturing the same according to an embodiment of the present disclosure have been described in detail with reference to the accompanying drawings. However, the present disclosure is not necessarily limited by the above-mentioned embodiment, and can naturally be carried out without departing from various modifications and equivalents by those having ordinary skill in the art to which the present disclosure pertains. Therefore, the scope of genuine rights of the present disclosure will be defined by the following claims.

## Claims

1. A busbar having improved bonding and reinforcing strength comprising:
a first metal member in which at least one fastening hole is formed;
a second metal member in which at least one strength reinforcement coupled to the fastening hole is formed; and
an electrically conductive bonding layer configured to bond the first metal member and the second metal member.

2. The busbar of claim 1, wherein the strength reinforcements are formed by a burring process.

3. The busbar of claim 1 or 2, wherein the strength reinforcements extend downward at a predetermined length so as to be insertable into fastening holes of the first metal member.

4. The busbar of claim 3, wherein the extending lengths of the strength reinforcements are smaller than or equal to depths of the fastening holes.

5. The busbar of any one of claims 1 to 4, wherein the electrically conductive bonding layer is formed between the strength reinforcements and the fastening holes of the first metal member.

6. The busbar of any one of claims 1 to 5, wherein, after the strength reinforcements are inserted into fastening holes of the first metal member, the strength reinforcements press inner circumferential surfaces of the fastening holes.

7. The busbar of any one of claims 1 to 6, wherein the first metal member is made of an aluminum material, and the second metal member is made of a copper material.

8. The busbar of any one of claims 1 to 7, wherein the strength reinforcements have circular cross sections, polygonal cross sections, or elliptical cross sections.

9. The busbar of any one of claims 1 to 8, wherein one end of each of the strength reinforcements protrudes in an outer circumferential direction at a predetermined length and is formed to press at least one side of each of the fastening holes.

10. The busbar of any one of claims 1 to 9, wherein at least a part of the first metal member or the second metal member has at least one flexure bent in one direction.

11. The busbar of any one of claims 1 to 10, wherein shear stress is produced due to bonding strength applied to an interface of the first metal member or the second metal member.

12. The busbar of any one of claims 1 to 11, wherein an outer diameter (W₁) of each of the strength reinforcements is smaller than an inner diameter (W₂) of each of the fastening holes of the first metal member.

13. A method of manufacturing a busbar having improved bonding and reinforcing strength, the method comprising:
a process of preparing a first metal member in which at least one fastening hole is formed;
a process of preparing a second metal member which is made of a material different from that of the first metal member and in which at least one strength reinforcement is formed;
an electrically conductive adhesive applying process of applying an electrically conductive adhesive to one surface of the first metal member or one surface of the second metal member;
a bonding process of placing and pressing the second metal member on the one surface of the first metal member such that the strength reinforcements are inserted into the fastening holes; and
an adhesive hardening process of hardening the electrically conductive adhesive.

14. The method of claim 13, further comprising a pressing process of pressing at least some of the strength reinforcements after the bonding process and pressing inner circumferential portions of the fastening holes.

15. The method of claim 13 or 14, wherein the process of preparing a first metal member or the process of preparing a second metal member includes a process of bending at least a part of the first or second metal member to form flexures.
